# EUROPÄISCHE PATENTSCHRIFT

(11) **EP 3 041 385 B1**
(45) Veröffentlichungstag und Bekanntmachung des Hinweises auf die Patenterteilung: **05.06.2019**
(21) Anmeldenummer: 14777251.1
(22) Anmeldetag: 21.08.2014
(51) Int. Cl.: A47B 88/437

(54) **LAUFROLLE**
ROLLER
GALET DE GUIDAGE

(30) Priorität: 03.09.2013 AT 6822013
(43) Veröffentlichungstag der Anmeldung: 13.07.2016
(73) Patentinhaber: Fulterer AG & Co KG, 6890 Lustenau (AT)
(72) Erfinder: MÜLLER, Wolfgang, 6890 Lustenau (AT); GRÜBEL, Edwin, 9443 Widnau (CH); CAUSEVIC, Adis, 9430 St. Margrethen (CH); RAID, Karl, 6914 Hohenweiler (AT)
(74) Vertreter: Hofmann, Ralf U.
(86) Internationale Anmeldenummer: PCT/AT2014/000162
(87) Internationale Veröffentlichungsnummer: WO 2015/031919

(56) Entgegenhaltungen:
- DE-A1- 2 548 536
- FR-A1- 2 434 716
- US-A- 3 894 776
- US-A- 5 302 030
- US-B1- 6 902 240

## Beschreibung

Die Erfindung bezieht sich auf eine Laufrolle, insbesondere für Ausziehführungen für ausziehbare Möbelteile, welche um eine Achse drehbar ist, umfassend einen Laufbelag, der eine Lauffläche der Laufrolle bildet, und eine Felge, auf die der Laufbelag aufgebracht ist und die aus einem Material besteht, dessen Elastizitätsmodul größer als der Elastizitätsmodul des Materials des Laufbelags ist, und die einen Kopfabschnitt und einen radial innerhalb des Kopfabschnitts liegenden Halsabschnitt aufweist, dessen axiale Ausdehnung höchstens 70% der axialen Ausdehnung des Kopfabschnitts beträgt, wobei der Kopfabschnitt eine von der Achse der Laufrolle weggerichtete Mantelfläche aufweist, die eine Grenzfläche mit dem Laufbelag bildet und die sich bis zu einem jeweiligen Ende der axialen Ausdehnung des Kopfabschnitts erstreckt, an welchem eine an die äußere Oberfläche des Kopfabschnitts angelegte Tangente rechtwinkelig zur Achse der Laufrolle steht, und wobei in einem parallel zur Achse und durch die Achse verlaufenden Querschnitt durch die Laufrolle gesehen die Mantelfläche zumindest in ersten und zweiten Randabschnitten der axialen Ausdehnung des Kopfabschnitts, welche sich anschließend an das jeweilige Ende der axialen Ausdehnung des Kopfabschnitts über zumindest ein Drittel der axialen Ausdehnung des Kopfabschnitts erstrecken, eine konvexe Krümmung aufweist und der Laufbelag um mindestens 5%, vorzugsweise mindestens 10%, der axialen Ausdehnung des Kopfabschnitts der Felge über das jeweilige Ende der axialen Ausdehnung des Kopfabschnitts bezogen auf die axiale Richtung der Laufrolle über den Kopfabschnitt übersteht.

In verschiedenen Anwendungsbereichen, insbesondere bei Ausziehführungen für ausziehbare Möbelteile, werden herkömmlicherweise Laufrollen eingesetzt, die durchgehend aus dem gleichen Material ausgebildet sind. Die Materialwahl stellt hierbei notgedrungen einen Kompromiss hinsichtlich der verschiedenen an die Laufrolle gestellten Anforderungen dar, beispielsweise bezüglich der Tragfähigkeit der Laufrolle, ihrer Laufkultur (insbesondere hinsichtlich ihrer Geräuschentwicklung), ihrer Rollreibung sowie ihrer Haltbarkeit.

Zur Verbesserung der Laufkultur solcher Laufrollen, insbesondere in Hinblick auf ihr Abrollgeräusch, ist es bekannt geworden, die Lauffläche der Laufrolle mit einem Laufring aus einem gummiartigen Material zu versehen, der in einer in die Lauffläche eingebrachten, umlaufenden Nut angeordnet ist. Solche Laufrollen sind beispielsweise aus der DE 8 522 387 U1, DE 4 114 454 A1, DE 9 307 532 U1 und DE 8 306 360 U1 bekannt. Hinsichtlich anderer Eigenschaften der Laufrolle wird dadurch keine Verbesserung erreicht, die elastischen Laufringe übernehmen kaum Tragfähigkeit, sodass die Tragfähigkeit der Rolle etwa um das Verhältnis von Nutbreite zu Gesamtrollenbreite sinkt.

Beispielsweise aus der DE 1 963 211 U1 ist eine Laufrolle bekannt, bei der auf eine Felge, die im Querschnitt doppel-T-förmig ausgebildet ist, ein Laufbelag aufgespritzt ist, der aus Gummi oder dergleichen besteht und die Lauffläche der Laufrolle bildet. Die äußere Mantelfläche der Felge, auf die der Laufbelag aufgebracht ist, ist zylindrisch. Der Laufbelag erstreckt sich in axialer Richtung über die axiale Ausdehnung der Felge hinaus, wobei die gesamte, der Achse zugewandte Innenfläche des Laufbelages zylindrisch ist. Insbesondere, wenn es bei einer solchen Laufrolle zu einem Schieflauf kommt, bei welchem die Achse der Laufrolle gegenüber dem Untergrund, auf dem die Laufrolle abrollt, geneigt ist, ergeben sich bei höheren Traglasten große Belastungsspitzen in einem Bereich des Endes der axialen Erstreckung der Grenzfläche zwischen der Felge und dem Laufbelag, sodass es hier im Laufe der Zeit zu Abplatzungen des Laufbelages und damit einer Zerstörung der Laufrolle kommen kann. Auch ist die Rollreibung dieser Laufrolle aufgrund des niedrigen Elastizitätsmoduls von Gummimaterial, aus welchem der Laufbelag besteht, relativ hoch.

Eine weitere Laufrolle mit zylindrischer Grenzfläche zwischen der äußeren Mantelfläche einer im Querschnitt T-förmigen Nabe und dem darauf aufgebrachten Laufbelag ist aus der EP 2 325 526 A1 bekannt.

Zur Verbesserung des Verbundes zwischen dem Laufbelag und der äußeren Mantelfläche einer im Querschnitt doppel-T-förmig ausgebildeten Felge ist bei der aus der DE 42 20 461 A1 bekannten Laufrolle vorgesehen, die äußere Mantelfläche der Felge in beidseitigen Randabschnitten mit zumindest teilweise hinterschnitten ausgebildeten Stufen zu versehen, in welche der Laufbelag eingreift.

Eine Laufrolle der eingangs genannten Art geht aus der DE 1 724 200 U1 hervor. Die Felge weist einen im Querschnitt doppel-T-förmigen Querschnitt auf. Der Kopfabschnitt der Felge, auf den der Laufbelag aufgebracht ist, besitzt in Randabschnitten seiner axialen Ausdehnung, welche an Enden seiner axialen Ausdehnung anschließen, im Querschnitt durch die Laufrolle gesehen eine konvex gekrümmte äußere Mantelfläche. In Bereichen zwischen diesen konvex gekrümmten Abschnitten ist die Mantelfläche zylindrisch ausgebildet und mit einer mittigen Ringnut versehen, in welche der Laufbelag eingreift. Der Laufbelag erstreckt sich über die konvexen Abschnitte der Mantelfläche bis zu den axialen Enden der Ausdehnung der Mantelfläche, bei welchen eine an die Mantelfläche angelegte Tangente rechtwinkelig zur Achse der Rolle steht. Auch bei dieser Laufrolle treten beim Schieflauf in einem Bereich der Grenzfläche zwischen der Felge und dem Laufbelag, der an ein axiales Ende der Felge anschließt, hohe Kräfte auf, die der Dauerhaltbarkeit der Laufrolle entgegenstehen, vor allem wenn die Laufrolle für höhere Traglasten eingesetzt werden soll.

Weitere Laufrollen mit Felgen, die im Bereich ihrer Mantelfläche mit einem Laufbelag umspritzt sind, sind aus der DE 1 918 889 A1, DE 2 540 347 A, DE 1 944 695 A, DE 19 918 887 A1, DE 7 717 024 U1, DE 8 216 396 U1, JP 10-279244 A und DE 7 527 938 U1 bekannt.

In Ausziehführungen, speziell Schwerlastauszügen, werden üblicherweise materialeinstückig ausgebildete Laufrollen eingesetzt, die durchgehend aus dem gleichen Werkstoff, nämlich POM ausgebildet sind.

Eine Laufrolle der eingangs genannten Art geht aus der DE 25 48 536 A1 hervor. Auf eine Felge, die einen Kopfabschnitt und einen Halsabschnitt aufweist, ist ein Laufbelag aufgespritzt. Die Grenzfläche des Kopfabschnitts zum Laufbelag ist großteils eben, zum Rand hin aber jeweils gekrümmt. In dieser Schrift geht es darum, einen elastischen, weichen Laufbelag dauerhaft auf der Felge festzulegen. Um die Verbindung zu verbessern, ist die Felge mit parallel zur Radachse verlaufenden Bohrungen versehen, welche vom Material des Laufbelags durchsetzt werden, sodass eine formschlüssige Verbindung mit der Felge hergestellt wird.

Aufgabe der Erfindung ist es eine vorteilhafte Laufrolle der eingangs genannten Art bereitzustellen, welche bei guten Laufeigenschaften für relativ hohe Traglasten ausgebildet werden kann und hierbei eine gute Dauerhaltbarkeit aufweist. Erfindungsgemäß gelingt dies durch eine Laufrolle mit den Merkmalen des Anspruchs 1.

Bei einer Laufrolle gemäß der Erfindung weist in einem parallel zur Achse und durch die Achse verlaufenden Querschnitt durch die Laufrolle gesehen, vorzugsweise in jedem solchen Querschnitt, die Mantelfläche zumindest in ersten und zweiten Randabschnitten der axialen Ausdehnung des Kopfabschnittes (=Erstreckung des Kopfabschnitts in Richtung der Achse der Laufrolle) der Felge eine konvexe Krümmung auf. Diese ersten und zweiten Randabschnitte des Kopfabschnitts der Felge schließen an das jeweilige axiale Ende des Kopfabschnittes an und erstrecken sich zumindest über ein Drittel der axialen Ausdehnung des Kopfabschnitts. Vorzugsweise ist die Mantelfläche über die gesamte Ausdehnung dieser ersten und zweiten Randabschnitte konvex gekrümmt.

In Kombination hiermit steht der Laufbelag um mindestens 5%, vorzugsweise um mindestens 10%, der axialen Ausdehnung des Kopfabschnitts der Felge über das jeweilige Ende der axialen Ausdehnung des Kopfabschnitts bezogen auf die axiale Richtung der Laufrolle (=Richtung der Achse der Laufrolle) über den Kopfabschnitt über.

Eine solche Laufrolle kann für relativ hohe Traglasten ausgebildet werden und hierbei eine sehr gute Dauerhaltbarkeit aufweisen. Gerade bei einem Schieflauf der Laufrolle, wenn die Achse der Laufrolle gegenüber der Oberfläche der Laufbahn, auf der die Laufrolle abläuft, geneigt ist, können durch die erfindungsgemäße Ausbildung Spitzen der im Laufflächenmaterial und an der Grenzfläche zwischen dem Laufbelag und der Felge auftretenden Spannungen vermieden bzw. deutlich verringert werden. Erfindungsgemäß wird hierbei ein relativ hartes Material für den Laufbelag eingesetzt. Der Elastizitätsmodul des Materials des Laufbelags ist größer als 500 MPa und kleiner als 2500 MPa.

Der Elastizitätsmodul des Materials der Felge ist größer als 4000 MPa, wobei der Elastizitätsmodul des Materials der Felge 2mal bis 20mal, vorzugsweise 5mal bis 10mal, besonders bevorzugt 8mal bis 12mal, größer ist als der Elastizitätsmodul des Materials des Laufbelages.

Vorzugsweise ist der Elastizitätsmodul des Materials der Felge kleiner als 30000 MPa. Bezogen auf den parallel zur Achse und durch die Achse verlaufenden Querschnitt durch die Laufrolle nimmt die in radialer Richtung gemessene Dicke des Laufbelages zumindest über die Randabschnitte des Kopfabschnitts zum jeweiligen axialen Ende des Kopfabschnitts hin stetig zu.

Günstigerweise ist im parallel zur Achse und durch die Achse verlaufenden Querschnitt durch die Laufrolle gesehen, vorzugsweise in jedem solchen Querschnitt gesehen, die in radialer Richtung gemessene Dicke des Laufbelages in einem Abstand vom jeweiligen Ende der axialen Erstreckung des Kopfabschnitts der Felge, der 15% der gesamten axialen Erstreckung des Kopfabschnitts der Felge beträgt, um 2% bis 20%, vorzugsweise um 3% bis 12%, besonders bevorzugt um 5% bis 10%, größer als an der Stelle des Kopfabschnitts, an welcher die Felge ihre größte radiale Ausdehnung aufweist. Diese letztgenannte Stelle der größten radialen Ausdehnung der Felge kann beispielsweise in der Mitte der axialen Ausdehnung der Felge liegen oder, falls die Felge in der Mitte ihrer axialen Ausdehnung eine Nut zur Verbesserung der Verankerung des Laufbelages aufweist, neben dieser Nut liegen. Vorteilhafterweise geht die Mantelfläche des Kopfabschnitts der Felge, die auch die Mantelfläche der gesamten Felge bildet, stetig in beidseitig an die Mantelfläche anschließende Seitenflächen der Felge über. Die Seitenflächen beginnen also an den Enden der axialen Erstreckung des Kopfabschnittes, wo die an die Oberfläche des Kopfabschnitts angelegte Tangente jeweils rechtwinkelig zur Achse der Laufrolle steht und nähern sich ausgehend von ihrem Beginn zunehmend der Achse der Laufrolle an. Die axiale Ausdehnung des Kopfabschnitts verringert sich hierbei ausgehend von der radialen Stelle, an welcher die Seitenflächen beginnen, mit abnehmendem Abstand von der Achse, bis der Kopfabschnitt in den Halsabschnitt übergeht. Der Übergang zwischen dem Kopfabschnitt und dem Halsabschnitt erfolgt hierbei durch eine konkave Krümmung der Oberfläche der Felge, wobei die radiale Grenze zwischen dem Kopfabschnitt und dem Halsabschnitt dort angesetzt werden kann, wo sich an den beiden Enden dieser konkaven Krümmung an die Oberfläche der Felge angelegte Tangenten schneiden. Es ist vorteilhaft, wenn die axiale Ausdehnung des Halsabschnitts über seine gesamte radiale Ausdehnung mit zunehmendem Abstand von der Achse zunimmt. Die auftretenden Belastungen können hierbei vom Halsabschnitt besonders gut aufgenommen werden. Beispielsweise kann der Halsabschnitt über den Großteil seiner radialen Ausdehnung in einem parallel zur Achse und durch die Achse verlaufenden Querschnitt durch die Laufrolle gesehen, vorzugsweise in jedem solchen Querschnitt gesehen, eine von zwei Geraden begrenzte Kontur aufweisen, wobei der Öffnungswinkel zwischen diesen beiden Geraden vorzugsweise im Bereich von 5° bis 20° liegt.

Der Halsabschnitt weist vorteilhafterweise eine gewisse elastische Biegbarkeit auf. Dadurch können bei einem Schieflauf der Laufrolle die auftretenden Belastungen noch gleichmäßiger über die Ausdehnung des Materials des Laufbelages verteilt werden. Vorzugweise beträgt hierbei die axiale Ausdehnung des Halsabschnitts 20% bis 70%, besonders bevorzugt 25% bis 40%, der axialen Ausdehnung des Kopfabschnitts.

Eine erfindungsgemäße Laufrolle eignet sich insbesondere zum Einsatz in Ausziehführungen, die für hohe Traglasten ausgelegt sind. So können beispielsweise bei Ausziehführungen, die für maximale insgesamte Traglasten (ausziehbares Möbelteil plus erlaubte Zuladung) von mindestens 1000 N ausgelegt sind, erfindungsgemäße Laufrollen mit Außendurchmessern im Bereich von 15mm bis 30mm eingesetzt werden und bei Ausziehführungen die für maximale insgesamte Traglasten von mindestens 2000 N ausgelegt sind, erfindungsgemäße Laufrollen mit Außendurchmessern im Bereich von 30mm bis 60mm oder zwei oder mehrere Rollen pro Tragposition mit Außendurchmessern im Bereich von 15mm bis 30mm eingesetzt werden.

Die spezifische Traglast der Rolle kann im Wesentlichen mit dem Volumen der zylindrischen Außenhülle (Bruttobauvolumen) der Rolle beschrieben werden, also DM^2*Pi/4*B, wobei DM der Durchmesser der Rolle ist und B die Breite der Lauffläche.

Eine erfindungsgemäße Rolle kann insbesondere zur Aufnahme einer spezifischen Traglast von zumindest bis zu 600N/mm³ Bruttobauvolumen eingesetzt werden, insbesondere in Ausziehführungen. Mit einer erfindungsgemäßen Ausbildung können beispielsweise spezifische Traglasten von 650 - 750N/mm³ Bruttobauvolumen getragen werden.

Erfindungsgemäße Rollen können z.B. einen Durchmesser im Bereich von 16mm - 25mm aufweisen und eine Breite im Bereich von 6mm - 11 mm aufweisen. Alternativ können auch zwei Rollen hintereinander angeordnet werden, in diesem Falle können Rollen mit einem Durchmesser im Bereich von 16mm - 20mm und einer Breite im Bereich von 5mm bis 7mm eingesetzt werden. Die genannten Abmessungen sind beispielhaft für eine Auslegung einer Rolle für eine Rollenlast von bis zu 2000N. Bei anderen Rollenlasten gelten etwa vergleichbare spezifische Traglasten, dementsprechend andere Durchmesser- und Breitenmaße.

Die beispielhaft angeführten Verhältnisse gelten für Lebensdauererwartungen im Bereich von 10.000 bis 50.000 Bewegungen bei beispielhaften Auszugslängen von 600mm. Bei anderen Lebensdauererfordernissen und anderen Auszugslängen, insbesondere auch Überauszügen mit ungünstigen Hebelverhältnissen sind analog andere Rollenauslegungen erforderlich.

Grundsätzlich können Rollen im Durchmesserbereich von ca. 15 bis ca. 60mm und einer Breite von 4 bis 20mm in der beschriebenen Art gebaut werden, um Anwendungen bis über 10000N und/oder Auszugslängen bis über 1m bewerkstelligen zu können.

Zweckmäßig können erfindungsgemäße Rollen auch für Nebenfunktionen, insbesondere zum Zwecke der Seitenführung in Schienensystemen, eingesetzt werden. Bei solchen Rollen steht oft eine niedrige bis mittlere Traglast (ab wenigen 10N) bei besonders beengten Platzverhältnissen im Vordergrund. Für diese Anwendungsbereiche sind Rollen mit Durchmessern von 6-15mm und Breiten von 2 - 12mm in der beschriebenen Art einsetzbar.

Gerade bei Ausziehführungen für hohe Traglasten sind im ausgezogenen Zustand der Ausziehführung gewisse Verwindungen der Führungsschienen der Ausziehführung unvermeidlich, sodass es zu einem Schieflauf der Laufrollen kommt. Die auf das Material der Laufrolle lokal wirkenden Belastungen werden dadurch an den betreffenden Stellen der Laufrollen weiter erhöht.

Weitere Vorteile und Einzelheiten der Erfindung werden im Folgenden anhand der beiliegenden Zeichnung erläutert. In dieser zeigen:
Fig. 1 eine axiale Ansicht einer Laufrolle gemäß dem Stand der Technik;
Fig. 2 einen Querschnitt entlang der Linie AA von Fig. 1 beim einem Schräglauf der Laufrolle auf einer Laufbahn;
Fig. 3 ein vergrößertes Detail B von Fig. 2;
Fig. 4 einen Querschnitt durch eine weitere Laufrolle gemäß dem Stand der Technik bei einem Schräglauf auf einer Laufbahn;
Fig. 5 eine axiale Ansicht einer Laufrolle gemäß einer ersten Ausführungsform der Erfindung;
Fig. 6 einen Querschnitt entlang der Linie CC von Fig. 5;
Fig. 7 die mit einem Felgenmaterial, welches einen hohen Elastizitätsmodul aufweist, ausgebildete Laufrolle von Fig. 5 und Fig. 6 beim Schräglauf der Laufrolle auf eine Laufbahn;
Fig. 8 ein vergrößertes Detail D von Fig. 7;
Fig. 9 die mit einem Felgenmaterial, welches einen geringeren Elastizitätsmodul aufweist, ausgebildete Laufrolle von Fig. 5 und 6 beim Schräglauf auf einer Laufbahn;
Fig. 10 ein mittels einer Ausziehführung, welche in erfindungsgemäßer Weise ausgebildete Laufrollen aufweist, aus einem Möbelkorpus ausziehbares Möbelteil;
Fig. 11 die auf einer Seite des ausziehbaren Möbelteils angeordneten Schienen der Ausziehführung im auseinandergenommenen Zustand, die Schienen vereinfacht dargestellt;
Fig. 12 eine stirnseitige Ansicht der zusammengesetzten Schienen von vorne;
Fig. 13 einen Schnitt entlang der Linie EE von Fig. 12;
Fig. 14 einen Querschnitt durch eine Laufrolle gemäß einer zweiten Ausführungsform der Erfindung;
Fig. 15 einen Querschnitt durch eine Laufrolle gemäß einer dritten Ausführungsform der Erfindung;
Fig. 16 einen Querschnitt durch eine Laufrolle gemäß einer vierten Ausführungsform der Erfindung;
Fig. 17 einen Querschnitt durch eine Laufrolle gemäß einer fünften Ausführungsform der Erfindung.

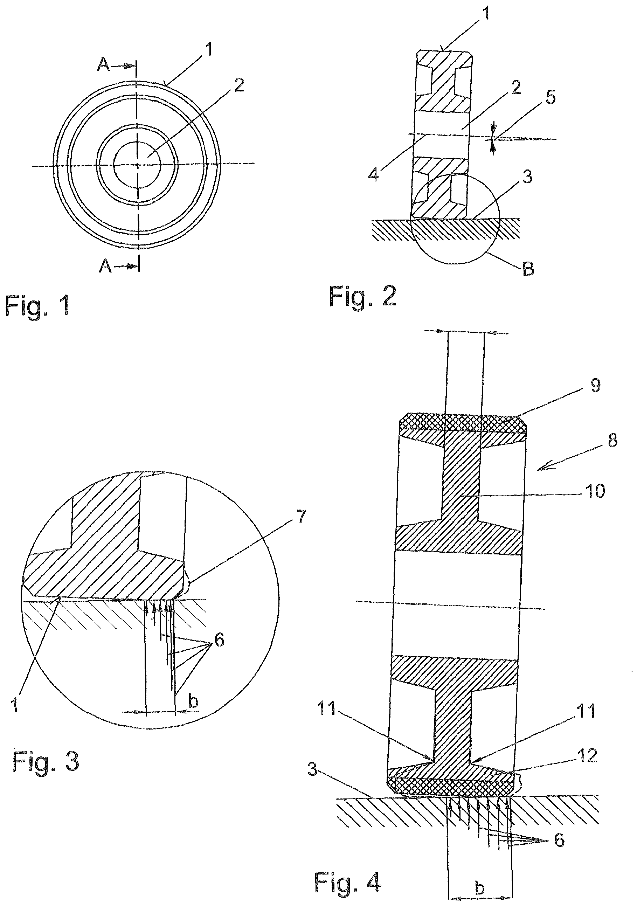

Die Fig. 1 bis 3 zeigen eine aus nur einem Material bestehende Laufrolle gemäß dem Stand der Technik. Die Laufrolle wird von einem im Querschnitt doppel-T-förmig ausgebildeten, im Wesentlichen biegesteifen Laufrollenkörper ausgebildet. Die äußere, zylindrische Mantelfläche 1 bildet die Lauffläche der Laufrolle. Eine zentrale, in axialer Richtung durchgehende Durchtrittsöffnung 2 dient zur Aufnahme eines Achsbolzens, um welche sich die Laufrolle drehen kann. Fig. 2 und Fig. 3 stellen einen Schieflauf der Laufrolle auf einer Laufbahn 3 dar, d.h. die Achse 4 der Laufrolle ist gegenüber der Laufbahn um einen Winkel 5 geneigt, der beispielsweise im Bereich von 1° bis 3° liegen kann. In Fig. 3 ist die Auflagenbreite b bei einer bestimmten Traglast der Rolle dargestellt, welche von der auftretenden Verformung der Materialien abhängt. Weiters ist der auf die Mantelfläche 1 wirkende Kontaktdruck durch Pfeile 6 angedeutet. Die zunehmende Länge der Pfeile 6 zeigt den Anstieg des Kontaktdruckes über die Auflagebreite zum Rand der Laufrolle hin. Im Weiteren zeigt eine strichlierte Linie 7 stark überzeichnet die zu erwartende Ballung des Materials in der Randzone, in welcher bei hohen Lasten die starke Walkung im Laufe der Zeit zur Zerstörung des Materials der Laufrolle führt.

Fig. 4 zeigt einen Querschnitt durch eine weitere herkömmliche Laufrolle, bei welcher auf eine im Querschnitt doppel-T-förmige Felge 8 ein Laufbelag 9 aufgebracht ist. Der Laufbelag 9 besteht aus einem Material, dessen Elastizitätsmodul kleiner als der Elastizitätsmodul des Materials der Felge 8 ist. Die Felge 8 weist bei einer entsprechenden Belastung der Laufrolle bei einem Schieflauf der Laufrolle auf einer Laufbahn 3 in ihrem Halsabschnitt 10 eine gewisse Biegbarkeit auf. Der gebogene Zustand der Felge 8 ist in Fig. 4 durch strichlierte Linien angedeutet (überzeichnet, d.h. übertrieben, dargestellt). Diese elastische Verbiegung der Felge 8 zusammen mit der Elastizität des Materials des Laufbelags 9 führt zu einer Verbreiterung der Auflagebreite b. Dennoch steigt der auf den Laufbelag 9 wirkende Kontaktdruck, der durch Pfeile 6 angedeutet ist, über die Auflagebreite zum Seitenrand des Laufbelags 9 hin stark an, wodurch in diesem Bereich die auftretenden Materialspannungen hoch sind und im Laufe der Zeit das starke Walken zu einer Ablösung des Laufbelages 9 von der Felge 8 und in der Folge zu Abplatzungen von Teilen des Laufbelags führen kann. An den Ecken 11 zwischen dem Kopfabschnitt 12 der Felge 8 und dem Halsabschnitt 10 der Felge 8 treten bei Schieflauf die größten auf die Felge 8 wirkenden Spannungen auf (auf der einen Seite Druck- auf der anderen Seite Zugspannungen), die im Laufe der Zeit bei hohen Belastungen der Laufrolle zu einem Felgenbruch führen können. Die Spannungsspitzen sind umso größer, je härter das Material des Laufbelages ist, sodass üblicherweise relativ weiche gummielastische Materialien mit niedrigem Elastizitätsmodul eingesetzt werden. Der Einsatz solcher Materialien führt aber zu einer relativ hohen Rollreibung und auch der Abrieb und somit der Verschleiß ist relativ groß.

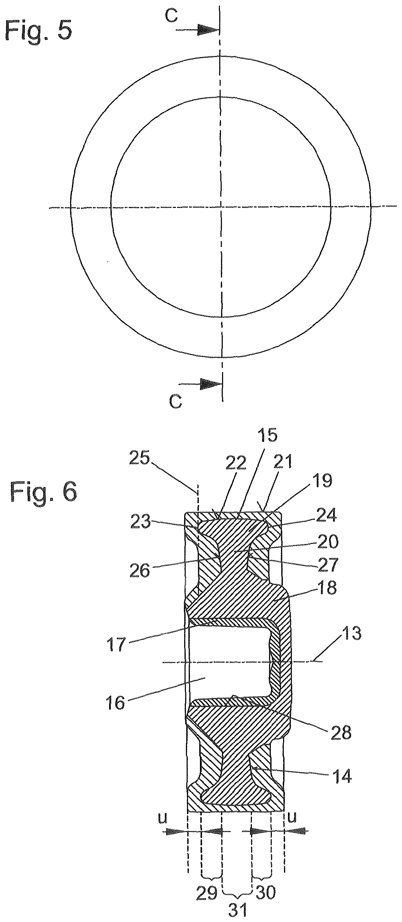

Eine Laufrolle gemäß einer ersten Ausführungsform der Erfindung ist in den Fig. 5 und 6 dargestellt. Die Laufrolle, die um eine Achse 13 drehbar ist, besitzt eine Felge 14, auf die ein Laufbelag 15 aufgebracht ist. Der Laufbelag 15 ist stoffschlüssig mit der Felge 14 verbunden, insbesondere ist der Laufbelag 15 auf die Felge 14 aufgespritzt.

Im gezeigten Ausführungsbeispiel besitzt die Felge 14 eine zur Achse 13 konzentrische Sacklochausnehmung 16, in welche eine Hülse 17 eingebracht ist, beispielsweise durch Anspritzen an die Felge 14. Diese dient zur Aufnahme eines die Achse 13 bildenden Achsstummels. Die Hülse 17 bildet somit zusammen mit einem Nabenabschnitt 18 der Felge 14 eine Nabe der Laufrolle. Falls die Felge 14 aus einem ausreichend gleitfähigen und abriebfesten Material besteht, könnte die Hülse 17 auch entfallen und der Nabenabschnitt 18 der Felge 14 allein die Nabe der Laufrolle bilden.

In einer Modifikation der gezeigten Ausbildung könnte der Nabenabschnitt 18 anstelle einer Sacklochausnehmung 16 auch eine die Felge 14 axial durchsetzende Durchgangsöffnung aufweisen, in welcher eine beidseitig offene Hülse angeordnet ist, um die Laufrolle auf einem die Laufrolle durchsetzenden Achsbolzen anzuordnen. Wiederum könnte die Hülse bei einer geeigneten Ausbildung des Materials der Felge auch entfallen. Eine Laufrolle dieser Art könnte beispielsweise auch bei einer achslos oder mit Spiel gelagerten Laufrolle eingesetzt werden, wie sie beispielsweise bei Differentialauszügen als Differentialrollen verwendet werden.

Die Felge 14 umfasst einen Kopfabschnitt 19 und einen radial innerhalb des Kopfabschnitts 19 liegenden Halsabschnitt 20 mit einer axialen Ausdehnung (=Erstreckung in Richtung der Achse 13), welche höchstens 70% der axialen Ausdehnung des Kopfabschnitts 19 beträgt. Insbesondere schließt der Halsabschnitt 20 nach innen (=in Richtung zur Achse 13 der Laufrolle) an den Kopfabschnitt 19 an, d.h. es liegt kein weiterer Abschnitt dazwischen und der Kopfabschnitt und der Halsabschnitt gehen unmittelbar ineinander über. Vorzugsweise beträgt die axiale Ausdehnung des Halsabschnitts 20 20% bis 70%, besonders bevorzugt 25% bis 40%, der axialen Ausdehnung des Kopfabschnitts 19. Die axiale Ausdehnung des Halsabschnitts 20 nimmt hierbei im Ausführungsbeispiel mit zunehmendem Abstand von der Achse 13 zu. Der Halsabschnitt 20 ist im Querschnitt entsprechend Fig. 6 gesehen im Wesentlichen trapezförmig ausgebildet, mit einem Öffnungswinkel 49 zwischen den ebenen Abschnitten der Seitenflächen 26, 27 im Bereich des Halsabschnitts 20.

Der Halsabschnitt 20 und der Kopfabschnitt 19 weisen zusammen im Querschnitt gesehen eine T-Form auf.

Radial innerhalb des Halsabschnitts 20 liegt der Nabenabschnitt 18 der Felge 14, dessen axiale Ausdehnung wiederum größer als diejenige des Halsabschnitts 20 ist, im Ausführungsbeispiel ist die axiale Ausdehnung des Nabenabschnitts 18 größer als diejenige des Kopfabschnitts 19. Die Felge ist insbesondere doppel-T-förmig ausgebildet. Je nach den Erfordernissen der Anwendung der Laufrolle könnte ein solcher verbreiterter Nabenabschnitt 18 aber auch entfallen. Die Nabe der Laufrolle könnte hierbei direkt von einer der Achse 13 zugewandten Innenfläche des Halsabschnitts 20 oder einer in einer zentralen Ausnehmung im Halsabschnitt angeordneten, vorzugsweise an die Felge 14 angespritzten Hülse gebildet werden. Eine äußere, von der Achse 13 weggerichtete Oberfläche des Laufbelages 15 bildet die Lauffläche 21 der Laufrolle und ist rotationssymmetrisch in Bezug auf die Achse 13. Im Ausführungsbeispiel von Fig. 5 und 6 ist die Lauffläche des Laufbelages kreiszylindermantelförmig ausgebildet. Leicht konkave oder leicht konvexe Ausbildungen der Lauffläche 21 sind aber ebenso möglich, wie weiter unten noch genauer erläutert wird.

Der zwischen der Lauffläche 21 und der Felge 14 liegende Bereich der Laufrolle ist vom Material des Laufbelages vollständig ausgefüllt.

Der Kopfabschnitt 19 der Felge 14 weist eine Mantelfläche 22 auf, die von der Achse 13 abgewandt ist, also bezogen auf die radiale Richtung nach außen gerichtet ist. Die Mantelfläche 22 bildet eine Grenzfläche mit dem Laufbelag 9.

In die Mantelfläche 22 werden die auf den Laufbelag 15 einwirkenden Kräfte eingeleitet, wenn die Laufrolle auf einer ebenen, parallel zur Achse 13 der Laufrolle liegenden Laufbahn abrollt. Die Mantelfläche 22 erstreckt sich somit bis zu einem jeweiligen axialen Ende 23, 24 des Kopfabschnitts 19 (=Punkt der größten Erstreckung des Kopfabschnitts 19 in die jeweilige Richtung parallel zur Achse 13). An diesem jeweiligen axialen Ende steht eine an die äußere Oberfläche des Kopfabschnitts 19 angelegte Tangente 25 rechtwinkelig zur Achse 13 der Laufrolle.

An ein jeweiliges axiales Ende 23, 24 der Mantelfläche 22, die auch als Mantelfläche der gesamten Felge 14 angesehen werden kann, schließt eine jeweilige Seitenfläche 26, 27 der Felge 14 an, welche sich zunächst über den Teil des Kopfabschnitts 19 erstreckt, über welchen sich die axiale Ausdehnung des Kopfabschnitts 19 in Richtung zur Achse 13 verringert, und sich im Weiteren über den Halsabschnitt 20 und zumindest einen Teil des Nabenabschnitts 18 erstreckt (auf einer Seite der Felge 14 geht die Seitenfläche 26 in eine die Sacklochausnehmung 16 begrenzende Innenfläche 28 über).

Die Mantelfläche 22 des Kopfabschnitts 19 weist einen ersten Randabschnitt 29 auf, der beim ersten axialen Ende 23 des Kopfabschnitts 19 beginnt und sich anschließend an dieses in Richtung zum anderen axialen Ende 24 des Kopfabschnitts 19 erstreckt. Ein zweiter Randabschnitt 30 der Mantelfläche 22 beginnt beim zweiten axialen Ende 24 des Kopfabschnitts 19 und erstreckt sich anschließend an dieses in Richtung zum anderen axialen Ende 23 des Kopfabschnitts 19. Die auf die axiale Richtung (=Richtung der Achse 13) bezogene Breite des ersten und des zweiten Randabschnitts 29, 30 beträgt hierbei jeweils ein Drittel der gesamten axialen Ausdehnung des Kopfabschnitts 19 bzw. der Mantelfläche 22 zwischen den axialen Enden 23, 24 des Kopfabschnitts 19. Zwischen dem ersten und dem zweiten Randabschnitt 29, 30 liegt ein Mittelabschnitt 31 der Mantelfläche 22, der sich über das mittlere Drittel der axialen Ausdehnung des Kopfabschnitts 19 erstreckt.

Im Ausführungsbeispiel gemäß den Fig. 5 bis 6 ist die Mantelfläche 22 über ihre gesamte Ausdehnung zwischen den axialen Enden 23, 24 des Kopfabschnitts 19 konvex (also nach außen) gekrümmt, und zwar in jedem Querschnitt durch die Laufrolle gesehen, der durch die Achse 13 und parallel zu dieser verläuft.

Wenn in der Folge von einem Querschnitt durch die Laufrolle die Rede sein wird, so ist jeweils ein durch die Achse 13 und parallel zu dieser verlaufender Querschnitt gemeint.

Die Mantelfläche 22 ist im Querschnitt durch die Laufrolle gesehen also sowohl über den gesamten Verlauf des ersten Randabschnitts 29 als auch über den gesamten Verlauf des zweiten Randabschnitts 30 als auch über den gesamten Verlauf des Mittelabschnitts 31 konvex gekrümmt. In anderen Ausführungsbeispielen könnte dies nicht für jeden durch die Achse 13 und parallel zu dieser verlaufenden Querschnitt durch die Laufrolle der Fall sein und/oder könnte sich die konvexe Krümmung nicht über die gesamte axiale Ausdehnung der Mantelflächen 22 erstrecken, insbesondere nicht über den Mittelabschnitt 31 oder nicht über den gesamten Mittelabschnitt 31 erstrecken. Beispielsweise könnte in jedem Querschnitt durch die Laufrolle gesehen (oder nur in einem Teil der Querschnitte gesehen) der Mittelabschnitt 31 über einen Teil seiner Erstreckung oder seine gesamte Erstreckung geradlinig verlaufen. Zumindest aber sind die Randabschnitte 29, 30 in Bereichen ihrer Erstreckung, welche an das jeweilige axiale Ende 23, 24 des Kopfabschnitts 19 anschließen, konvex gekrümmt, vorzugsweise über ihre gesamten Ausdehnungen, dies zumindest in einem Teil der durch die Achse 13 und parallel zu dieser verlaufenden Querschnitte durch die Laufrolle, vorzugsweise in allen solchen Querschnitten.

Durch die konvexen Krümmungen der Randabschnitte 29, 30 nimmt in einem, vorzugsweise jedem, Querschnitt durch die Laufrolle gesehen der Abstand der Mantelfläche 22 von der Achse 13 ausgehend vom jeweiligen axialen Ende 23, 24 des Kopfabschnitts 19 in Richtung zur Mitte der axialen Ausdehnung des Kopfabschnitts 19 gleichförmig zu, vorzugsweise zumindest über die gesamte Erstreckung des jeweiligen Randabschnitts 29, 30 bis zum Mittelabschnitt 31.

In einem, vorzugsweise jedem, Querschnitt durch die Laufrolle gesehen verläuft die Mantelfläche 22 zumindest über die Randabschnitte 29, 30 stetig, vorzugsweise über ihre gesamte Erstreckung, und schließt stetig an die beidseitig an die Mantelfläche 22 anschließenden Seitenflächen 26, 27 an. Die Mantelfläche 22 geht vorteilhafterweise über einen Krümmungsradius in eine jeweilige Seitenfläche 26, 27 über, der 3% bis 15%, vorzugsweise 5% bis 12%, besonders bevorzugt 7% bis 10%, des Durchmessers der Laufrolle beträgt.

Die Seitenflächen 26, 27 verlaufen vorteilhafterweise zumindest über die der Achse 13 zugewandte Oberfläche des Kopfabschnitts 19 und einen daran anschließenden Abschnitt des Halsabschnitts 20 ebenfalls stetig.

Der Krümmungsradius der Randabschnitte 29, 30 nimmt in einem, vorzugsweise jedem, Querschnitt durch die Laufrolle gesehen vom jeweiligen, der Mitte der axialen Erstreckung des Kopfabschnitts 19 zugewandten Ende des jeweiligen Randabschnitts 29, 30 zum axialen Ende 23, 24 zu, beispielsweise kann an einen Kreisbogen mit einem größeren Radius ein Kreisbogen mit einem kleineren Radius anschließen.

Die konvexe Krümmung der äußeren Oberfläche des Kopfabschnitts 19 setzt sich zunächst über Abschnitte 26, 27 der Seitenflächen fort, welche an die Mantelfläche 22 anschließen, und geht dann in einem, vorzugsweise jedem, Querschnitt durch die Laufrolle gesehen in eine konkave Krümmung im Bereich des Übergangs zwischen dem Kopfabschnitt 19 und dem Halsabschnitt 20 über. Der Krümmungsradius dieser konkaven Krümmung liegt günstigerweise im Bereich von 3% bis 15%, vorzugsweise im Bereich von 5% bis 12%, besonders bevorzugt im Bereich von 7% bis 10% des Durchmessers der Laufrolle.

Im Ausführungsbeispiel gemäß den Fig. 5 und 6 sind in einem, vorzugsweise jedem, Querschnitt durch die Laufrolle gesehen der Kopfabschnitt 19 und der Halsabschnitt 20 vollständig mit dem Material des Laufbelages 15 belegt, vorzugsweise umspritzt. Auch ein an den Halsabschnitt 20 anschließender Teil des Nabenabschnitts 18 ist noch mit dem Material des Laufbelages 15 belegt. Die Grenzfläche zwischen dem Material der Felge 14 und dem Material des Laufbelages 15 setzt sich also über an die Mantelfläche 22 anschließende Teile der Seitenflächen 26, 27 fort. In anderen Ausführungsbeispielen könnte auch nur ein geringerer Teil der Laufrolle vom den Laufbelag bildenden Material belegt, vorzugswise umspritzt, sein, beispielsweise könnten die Seitenflächen 26, 27 nur über ihren Verlauf über den Kopfabschnitt 19 oder eines Teiles hiervon oder nur über ihren Verlauf über den Kopfabschnitt 19 und den daran anschließenden Halsabschnitt 20 oder eines Teiles hiervon mit dem Material des Laufbelages 15 belegt sein. Zumindest sind die Randabschnitte 29, 30 über ihre gesamte axiale Ausdehnung und vorzugsweise auch über ihre gesamte Umfangserstreckung, d.h. bezogen auf jeden durch die Achse 13 der Laufrolle verlaufenden und parallel hierzu liegenden Querschnitt, mit dem Material des Laufbelages 15 belegt, vorzugsweise gilt dies auch für den Mittelabschnitt 31. Der Mittelabschnitt könnte in einem, vorzugsweise jedem, Querschnitt durch die Laufrolle gesehen, über einen Teil seiner Erstreckung oder seine gesamte Erstreckung auch frei bleiben. Es könnte in diesem Bereich auch ein Laufring aus einem gummiartigen Material in eine um den Umfang der Laufrolle umlaufenden Ausnehmung im Laufbelag 15 eingesetzt sein.

Dadurch, dass der Laufbelag 15 den Kopfabschnitt 19 zumindest bis zu seinem axialen Ende hin umgreift, wo eine an die Oberfläche des Kopfabschnitts 19 angelegte Tangente rechtwinkelig zur Achse 13 steht (im Querschnitt durch die Laufrolle gesehen), wird auch ein Formschluss des Laufbelages 15 mit dem Kopfabschnitt 19 bezogen auf die axiale Richtung (=Richtung der Längsachse 13) erreicht.

Der Laufbelag 15 steht bezogen auf die axiale Richtung der Laufrolle (=Richtung der Achse 4 der Laufrolle) über die beiden axialen Enden 23, 24 des Kopfabschnitts 19 über. Der Überstand u über das jeweilige axiale Ende 23, 24 beträgt mindestens 5%, vorzugsweise mindestens 10%, der axialen Ausdehnung des Kopfabschnitts 19 zwischen seinen beiden axialen Enden 23, 24. Im gezeigten Ausführungsbeispiel beträgt dieser Überstand u über das jeweilige axiale Ende etwa 15%.

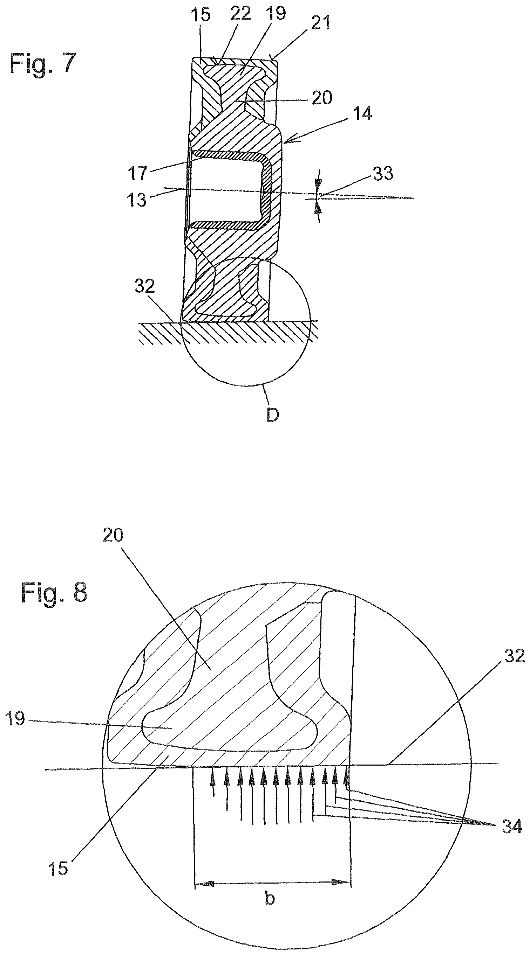

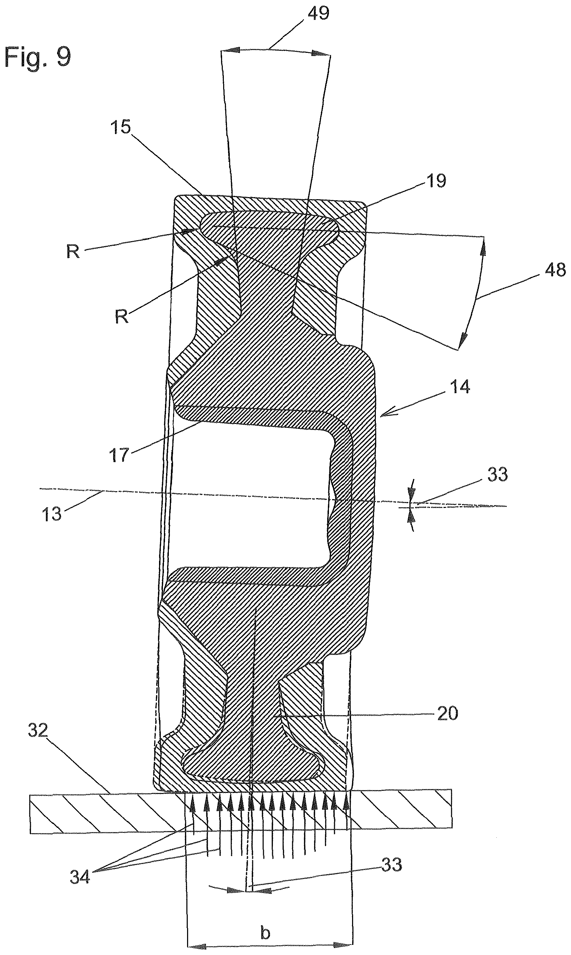

Durch die beschriebene Ausbildung der Laufrolle können die beim Schieflauf der Laufrolle im Material des Laufbelages 15 maximal auftretenden Spannungen verringert werden, wie im Folgenden anhand der Fig. 7 bis 9 erläutert wird. Fig. 7 und 8 zeigen die Laufrolle bei einem Schieflauf auf einer Laufbahn 32, in einer Variante dieses Ausführungsbeispiels, bei der die Felge 14 aus einem Material mit einem so hohen Elastizitätsmodul ausgebildet ist, dass bei der auf die Laufrolle einwirkenden Traglast praktisch keine Verbiegung der Felge 14 auftritt. In Fig. 9 ist wiederum eine Laufrolle dargestellt, die entsprechend Fig. 5 und 6 ausgebildet ist, wobei in der hier dargestellten Variante dieses Ausführungsbeispiels die Felge 14 aber aus einem Material besteht, welche bei der auf die Laufrolle einwirkenden Traglast eine gewisse Verbiegung der Felge 14 ermöglicht, die in Fig. 9 stark überzeichnet dargestellt ist. In Fig. 9 ist auch der unverbogene Zustand der Felge mit strichlierten Linien angedeutet.

Bei einem Schieflauf der Laufrolle ist die Achse 13 der Laufrolle gegenüber der Oberfläche der Laufbahn 32 geneigt, schließt also mit dieser einen Winkel 33 ungleich 0° ein, vorzugsweise aber weniger als 5°. Beispielsweise kann der Winkel 33 im Bereich 1° bis 3° liegen.

Bei der in Fig. 7 und 8 dargestellten steifen Ausbildung der Felge 14 kommt es bei der angenommenen Traglast der Rolle durch die elastische Verformung des Laufbelages 15 zu einer Auflagenbreite b, die sich hier über ca. zwei Drittel der axialen Erstreckung der Lauffläche 21 erstreckt. Die Pfeile 34 deuten den auf den Laufbelag 15 einwirkenden Kontaktdruck an, der zu einer entsprechenden Verformung des Laufbelags 15 führt (die Länge des jeweiligen Pfeils 34 bildet die Größe des Pressdruckes ab). Der Kontaktdruck steigt von den Rändern der Auflagezone zu deren Zentrum hin an, wobei das Maximum relativ gering ist und der Kontaktdruck über einen relativ großen zentralen Bereich weitgehend konstant ist.

Wenn die Felge 14 aus einem eine Verbiegung der Felge zulassenden Material besteht, so vergrößert sich die Auflagebreite b gegenüber der in den Fig. 7 und 8 dargestellten Situation, vgl. Fig. 9. Die Auflagebreite b beträgt hier 70% bis 90% der axialen Erstreckung der Laufrolle. Der Kontaktdruck kann somit über einen noch größeren Bereich verteilt werden und das Maximum des durch die Pfeile 34 dargestellten Kontaktdrucks verringert sich weiter.

Die Verbiegung der Felge ist vorzugsweise so, dass bei der maximal zulässigen Traglast der Laufrolle die Verbiegung ein Viertel bis drei Viertel des Schieflaufwinkels 33 beträgt.

In Fig. 9 ist im Weiteren ein Winkel 48 eingezeichnet, um den die Unterseite des Kopfabschnitts 19 gegenüber der Achse 13 geneigt ist, und zwar im Bereich der Unterseite des Kopfabschnitts 19, der zwischen dem konvexen Übergang zwischen den Seitenflächen 26, 27 und der Mantelfläche 22 und dem konkaven Übergang zwischen dem Kopfabschnitt 19 und dem Halsabschnitt 20 liegt. Dieser Winkel 48 liegt vorzugsweise im Bereich zwischen 10° und 30°.

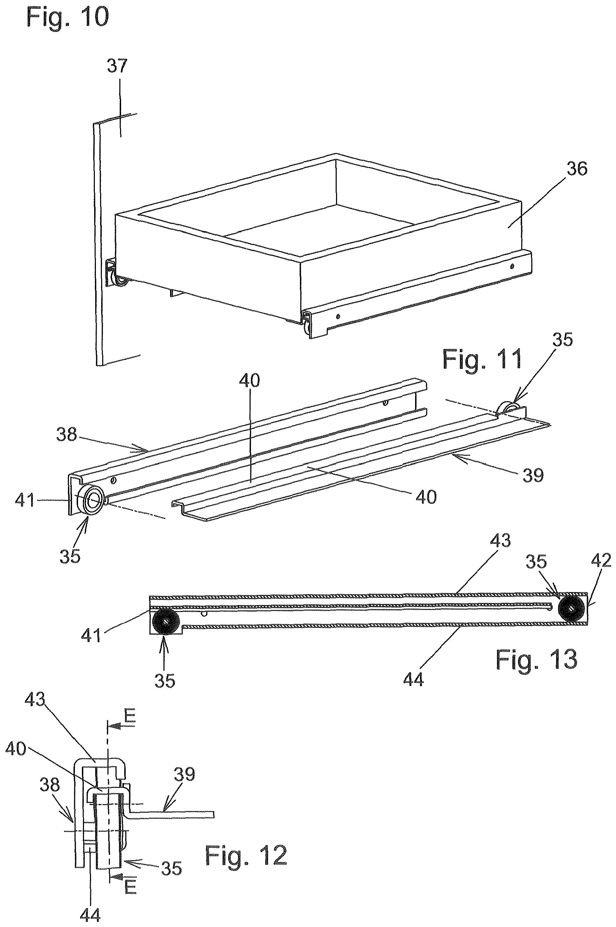

Die Fig. 10 bis 12 zeigen ein Beispiel für eine Ausziehführung, die mit erfindungsgemäßen Laufrollen 35 bestückt ist. Mittels der Ausziehführung kann ein ausziehbares Möbelteil 36 aus einem Möbelkorpus 37 ausgezogen werden. Die Ausziehführung umfasst eine am Möbelkorpus 37 anzubringende Korpusschiene 38 und eine am ausziehbaren Möbelteil anzubringende Ausziehschiene 39 auf beiden Seiten des ausziehbaren Möbelteils 36. Die Ausziehführung ist hier nach Art eines Teleskopauszuges ausgebildet, wobei ein Auflagesteg 40 der Ausziehschiene 39 auf einer im Bereich des vorderen Endes 41 der Korpusschiene 38 drehbar gelagerten Laufrolle 35 abrollt und eine im Bereich des hinteren Endes 42 der Ausziehschiene 39 drehbar an dieser gelagerte Laufrolle 35 zwischen Führungsstegen 43, 44 der Korpusschiene 38 abrollt.

Eine Ausziehführung, bei welcher zumindest ein Teil der Laufrollen in erfindungsgemäßer Weise ausgebildet ist, kann auch in anderer Weise als in den Fig. 10 bis 13 dargestellt ausgebildet sein. Beispielsweise kann zwischen der Korpusschiene 38 und der Ausziehschiene 39 zusätzlich eine Mittelschiene vorhanden sein. Die Ausziehführung könnte beispielsweise nach Art eines Differentialauszuges ausgebildet sein, bei welchem die Laufrollen alle an der Mittelschiene drehbar gelagert sind und eine an der Mittelschiene drehbar gelagerte, zwischen einer Laufbahn der Ausziehschiene und einer Laufbahn der Korpusschiene druckbelastete Differentialrolle den differentiellen Lauf der Schienen bewirkt.

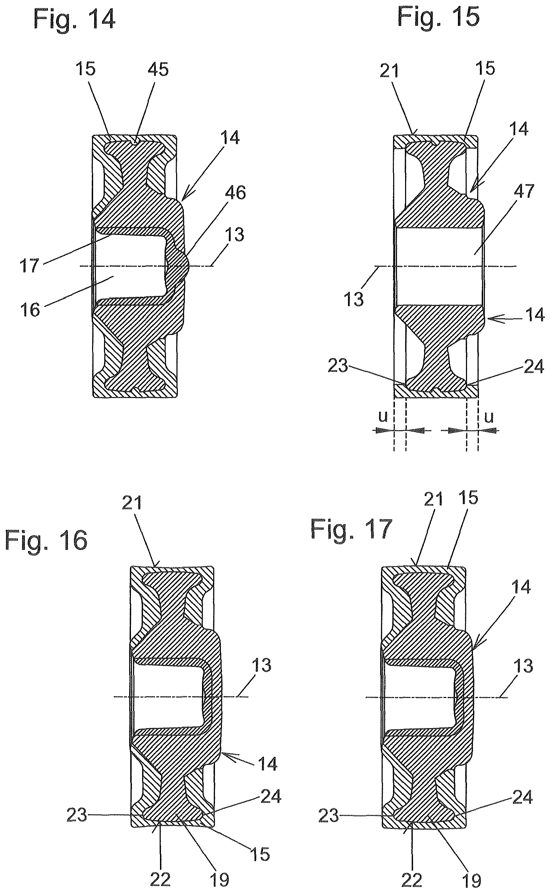

Im Folgenden werden weitere mögliche Beispiele für Ausbildungen von erfindungsgemäßen Laufrollen anhand der Fig. 14 bis 17 beschrieben. Die Laufrolle ist jeweils im Querschnitt analog Fig. 6 dargestellt. Abgesehen von den im Folgenden beschriebenen Unterschieden sind die Laufrollen gleich wie zuvor beschrieben ausgebildet.

Bei dem in Fig. 14 beschriebenen zweiten Ausführungsbeispiel weist die Felge 14 im Mittelabschnitt 31 der Mantelfläche 22 eine um ihren gesamten Umfang umlaufende Vertiefung (=Rille) 45 auf, wodurch der Formschluss zwischen dem Laufbelag 15 und der Felge 14 bezogen auf die Richtung der Achse 13 noch verbessert wird.

Im Weiteren besitzt die Hülse 17 eine stirnseitige Erhebung 46, welche auf der Seite der Laufrolle, die der Einführöffnung für den Achsstummel gegenüberliegt, durch eine an die Sacklochausnehmung 16 anschließende Öffnung mit gegenüber dem Durchmesser der Sacklochausnehmung 16 kleinerem Durchmesser im Nabenabschnitt 18 der Felge ragt. Die Erhebung steht über die Felge 14 axial vor. Die überstehende Oberfläche der Erhebung 46 dient zur stirnseitigen Lagerung der Laufrolle, beispielsweise gegen eine andere Schiene.

Die Vertiefung 45 könnte auch bei einer im Nabenbereich wie in Fig. 6 ausgebildeten Laufrolle eingesetzt werden. Die Erhebung 46 der Hülse 17 zur stirnseitigen Lagerung der Laufrolle könnte auch bei einer im Kopfabschnitt 19 der Felge 14 wie in Fig. 6 ausgebildeten Laufrolle eingesetzt werden.

Bei dem in Fig. 15 dargestellten dritten Ausführungsbeispiel einer erfindungsgemäßen Laufrolle ist der Kopfabschnitt 19 der Felge 14 nur über die Ausdehnung der Mantelfläche 22 mit dem Laufbelag 15 belegt, insbesondere umspritzt. Die Grenzfläche zwischen dem Laufbelag 15 und der Felge 14 erstreckt sich also über die Ausdehnung der Mantelfläche 22 bis zu den axialen Enden 23, 24 des Kopfabschnitts 19, wo die an die Oberfläche des Kopfabschnitts 19 angelegte Tangente 25 rechtwinkelig zur Achse 13 steht. Die Größe des axialen Überstandes u des Laufbelages 15 über den Kopfabschnitt 19 entspricht hierbei dem von Fig. 6. Die Mantelfläche 22 weist wiederum im axial mittleren Bereich eine um den Umfang der Laufrolle umlaufende Vertiefung 45 auf, welche auch entfallen könnte.

In diesem Ausführungsbeispiel ist die Felge 14 mit einer zentralen Durchgangsöffnung 47 ausgebildet. Mit dieser kann die Laufrolle drehbar auf einem die Durchgangsöffnung 47 durchsetzenden Achsbolzen gelagert werden. In axialer Richtung kann gegen ein Herunterziehen der Achse vom Achsbolzen eine entsprechende Sicherung vorgesehen sein, wie dies bekannt ist, z.B. durch einen Sprengring.

Auch eine Laufrolle, bei der die Belegung, insbesondere Umspritzung, der Felge 14 mit dem Material des Laufbelages 15 wie anhand von Fig. 6 beschrieben ausgebildet ist, kann mit einer eine Durchgangsöffnung 47 aufweisenden Felge 14 ausgebildet sein.

Andererseits kann die Innenfläche des Nabenabschnitts 18 der Felge 14 der in Fig. 15 dargestellten Laufrolle auch mit einer Hülse belegt sein, die insbesondere an die Felge 14 angespritzt ist.

Der Unterschied des in Fig. 16 dargestellten vierten Ausführungsbeispiels einer erfindungsgemäßen Laufrolle gegenüber der in Fig. 6 dargestellten Laufrolle besteht in der konkaven Ausbildung der Lauffläche 21. Der Abstand der Lauffläche 21 von der Achse 13 ist somit in einem zentralen Bereich der axialen Ausdehnung der Laufrolle geringer als in einem weiter randseitig liegenden Bereich, wobei der Abstand vorzugsweise über mindestens 90% der axialen Erstreckung der Laufrolle ausgehend von der Mitte der axialen Erstreckung zunimmt. Die Zunahme des Abstandes der Lauffläche von der Achse kann ausgehend von der Stelle des kleinsten Abstandes in beide axiale Richtungen unterschiedlich groß sein. Vorzugsweise beträgt die Zunahme des Abstandes weniger als 5% des kleinsten Abstandes.

Das in Fig. 17 dargestellte fünfte Ausführungsbeispiel einer erfindungsgemäßen Laufrolle unterscheidet sich von der in Fig. 6 dargestellten Laufrolle durch eine konvexe Ausbildung der Lauffläche 21. Der Abstand der Lauffläche 21 von der Achse 13 ist somit in einem zentralen Bereich der axialen Ausnehmung der Laufrolle größer als in einem weiter randseitig liegenden Bereich, wobei der Abstand vorzugsweise über mindestens 90% der axialen Erstreckung der Laufrolle ausgehend von der Mitte der axialen Erstreckung abnimmt. Die Abnahme des Abstandes der Lauffläche von der Achse kann ausgehend von der Stelle des größten Abstandes in beide axiale Richtungen unterschiedlich groß sein. Vorzugsweise beträgt die Abnahme des Abstandes weniger als 5% des größten Abstandes. Der Krümmungsradius der Lauffläche ist hierbei zumindest bis zu den axialen Positionen, die bei den axialen Enden 23, 24 des Kopfabschnittes 19 liegen, kleiner als der Krümmungsradius der Mantelfläche 22 des Kopfabschnitts 19. Die in radialer Richtung gemessene Dicke des Laufbelages nimmt somit in axialer Richtung zu den axialen Enden 23, 24 hin zu. Zumindest betrifft dies für die Bereiche der axialen Erstreckungen der ersten und zweiten Randabschnitte 29, 30 der Mantelfläche 22 des Kopfabschnitts 19 zu.

Sowohl bei dem anhand der Fig. 5 bis 9 beschriebenen Ausführungsbeispiel als auch bei den anhand der Fig. 14 bis 17 beschriebenen Ausführungsbeispielen besteht die Felge 14 aus POM. Zur Erhöhung der Steifigkeit weist das POM anorganische Beimengungen auf, z.B. Glasfasern, Glaskugeln oder mineralische Füllstoffe und besitzt insbesondere einen hohen Füllstoffanteil.
Der Laufbelag ist aus elastomermodifiziertem POM ausgebildet. Elastomermodifizierte Materialien sind auch als "schlagzäh modifizierte" Materialien bekannt. Es kann ein Anteil von weniger als 20 Gew% von Elastomeren oder thermoplastischen Elastomeren oder einer Kombination von Elastomeren oder thermoplastischen Elastomeren vorgesehen sein. Wenn von der Modifizierung mit Elastomeren die Rede ist, so sind hierbei jeweils auch thermoplastische Elastomere umfasst. Optional kann das Material des Laufbelages mit schmieraktiven Substanzen versehen sein, insbesondere bei Laufrollen, die seitliche Führungsfunktionen aufweisen.

Für die Hülse 17 wird günstigerweise ein Material gewählt, welches einen minimalen Reibungskoeffizienten aufweist und gleichzeitig einer sehr hohen Flächenpressung standhält. Beispiele für solche Materialien sind Kunststoffe wie POM, PBT oder PA, wobei diesen Materialien Gleitzusätze wie PTFE, Grafit, Silikonöl oder Disulfide, vorzugweise Molybtendisulfid, zugefügt sind. Zur Erhöhung der Druckfestigkeit können optional auch weitere Zusätze, insbesondere Glas, Karbon- oder Aramidfasern beinhaltet sein.

Vorteilhafterweise beträgt für das Material der Hülse µdynamisch 0,25 oder weniger. Die Felge 14 und/oder der Laufbelag 15 und/oder die Hülse 17 können auch aus zwei oder mehr unterschiedlichen Materialien ausgebildet sein. Beispielsweise könnte der Laufbelag in einem mittleren Abschnitt der axialen Ausdehnung der Laufrolle aus einem anderen Material als in Randabschnitten der Laufrolle ausgebildet sein.

Ein mögliches Verfahren zur Herstellung einer erfindungsgemäßen Laufrolle ist das 2K-Spritzgussverfahren, wobei zunächst die Felge 14 gespritzt wird und diese dann mit dem Laufbelag 15 entsprechend umspritzt wird. Wenn auch die Hülse 17 an die Felge 14 angespritzt werden soll, kann ein 3K-Spritzgussverfahren eingesetzt werden. Aus werkzeugtechnischen Gründen kann es auch vorteilhaft sein, die Reihenfolge der gespritzten Materialien zu tauschen. Besonders bevorzugt wird das Spritzen aller drei Komponenten in einem 2K-Werkzeug: Die Felge wird im ersten Schritt als erste Komponente gespritzt und im zweiten Schritt werden gleichzeitig Laufbelag und Hülse mit zwei separaten Materialzuführeinheiten jedoch im gleichen Arbeitsgang und im gleichen Werkzeug an die Felge angespritzt.

Unterschiedliche Modifikationen der gezeigten Ausführungsbeispiele sind denkbar und möglich, ohne den Bereich der durch die Patentansprüche definierten Erfindung zu verlassen. So könnte die Felge 14 beispielsweise im Halsabschnitt 20 diesen in axiale Richtung durchsetzende Durchgangsöffnungen aufweisen. Dadurch könnten auch zwischen diesen Durchgangsöffnungen liegende Speichen ausgebildet werden, die einen Nabenabschnitt der Felge mit einem Kopfabschnitt der Felge verbinden.

**Legende zu den Hinweisziffern:**

| | | | |
|---|---|---|---|
| 1 | Mantelfläche | 29 | erster Randabschnitt |
| 2 | Durchtrittsöffnung | 30 | zweiter Randabschnitt |
| 3 | Laufbahn | 31 | Mittelabschnitt |
| 4 | Achse | 32 | Laufbahn |
| 5 | Winkel | 33 | Winkel |
| 6 | Pfeil | 34 | Pfeil |
| 7 | Linie | 35 | Laufrolle |
| 8 | Felge | 36 | ausziehbares Möbelteil |
| 9 | Laufbelag | 37 | Möbelkorpus |
| 10 | Halsabschnitt | 38 | Korpusschiene |
| 11 | Ecke | 39 | Ausziehschiene |
| 12 | Kopfabschnitt | 40 | Auflagesteg |
| 13 | Achse | 41 | vorderes Ende |
| 14 | Felge | 42 | hinteres Ende |
| 15 | Laufbelag | 43 | Führungssteg |
| 16 | Sacklochausnehmung | 44 | Führungssteg |
| 17 | Hülse | 45 | Vertiefung |
| 18 | Nabenabschnitt | 46 | Erhebung |
| 19 | Kopfabschnitt | 47 | Durchgangsöffnung |
| 20 | Halsabschnitt | 48 | Winkel |
| 21 | Lauffläche | 49 | Öffnungswinkel |
| 22 | Mantelfläche | | |
| 23 | axiales Ende | | |
| 24 | axiales Ende | | |
| 25 | Tangente | | |
| 26 | Seitenfläche | | |
| 27 | Seitenfläche | | |
| 28 | Innenfläche | | |

## Patentansprüche

1. Laufrolle, insbesondere für Ausziehführungen für ausziehbare Möbelteile (36), welche um eine Achse (13) drehbar ist, umfassend einen Laufbelag (15), der eine Lauffläche (21) der Laufrolle bildet, und eine Felge (14), auf die der Laufbelag (15) aufgebracht ist und die aus einem Material besteht, dessen Elastizitätsmodul größer als der Elastizitätsmodul des Materials des Laufbelags (15) ist, und die einen Kopfabschnitt (19) und einen radial innerhalb des Kopfabschnitts (19) liegenden Halsabschnitt (20) aufweist, dessen axiale Ausdehnung höchstens 70% der axialen Ausdehnung des Kopfabschnitts beträgt, wobei der Kopfabschnitt (19) eine von der Achse (13) der Laufrolle weggerichtete Mantelfläche (22) aufweist, die eine Grenzfläche mit dem Laufbelag (15) bildet und die sich bis zu einem jeweiligen Ende (23, 24) der axialen Ausdehnung des Kopfabschnitts (19) erstreckt, an welchem eine an die äußere Oberfläche des Kopfabschnitts (19) angelegte Tangente (25) rechtwinkelig zur Achse (13) der Laufrolle steht, und wobei in einem parallel zur Achse (13) und durch die Achse (13) verlaufenden Querschnitt durch die Laufrolle gesehen die Mantelfläche (22) zumindest in ersten und zweiten Randabschnitten (29, 30) der axialen Ausdehnung des Kopfabschnitts (19), welche sich anschließend an das jeweilige Ende (23, 24) der axialen Ausdehnung des Kopfabschnitts (19) über zumindest ein Drittel der axialen Ausdehnung des Kopfabschnitts (19) erstrecken, eine konvexe Krümmung aufweist und der Laufbelag (15) um mindestens 5%, vorzugsweise mindestens 10%, der axialen Ausdehnung des Kopfabschnitts (19) der Felge (14) über das jeweilige Ende (23, 24) der axialen Ausdehnung des Kopfabschnitts (19) bezogen auf die axiale Richtung der Laufrolle über den Kopfabschnitt (19) übersteht, wobei die Felge (14) aus POM mit anorganischen Beimengungen zur Erhöhung der Steifigkeit ausgebildet ist und der Laufbelag (15) aus elastomermodifiziertem POM ausgebildet ist, wobei der Elastizitätsmodul des Materials des Laufbelages (15) größer als 500 MPa und kleiner als 2.500 MPa ist und der Elastizitätsmodul des Materials der Felge (14) größer als 4.000 MPa ist, wobei der Elastizitätsmodul des Materials der Felge (14) um das 2- bis 20-fache größer als der Elastizitätsmodul des Materials des Laufbelages (15) ist, und wobei bezogen auf den parallel zur Achse (13) und durch die Achse (13) verlaufenden Querschnitt durch die Laufrolle die in radialer Richtung gemessene Dicke des Laufbelages (15) zumindest über die Randabschnitte (29, 30) des Kopfabschnitts (19) zum jeweiligen axialen Ende (23, 24) des Kopfabschnitts (19) hin stetig zunimmt.

2. Laufrolle nach Anspruch 1, **dadurch gekennzeichnet, dass** bezogen auf den Querschnitt durch die Laufrolle die in radialer Richtung gemessene Dicke des Laufbelages (15) in einem 15% der gesamten axialen Erstreckung des Kopfabschnitts (19) betragenden Abstand vom jeweiligen Ende (23, 24) der axialen Erstreckung des Kopfabschnitts (19) um 2% bis 20%, vorzugsweise um 3% bis 12%, besonders bevorzugt um 5% bis 10%, größer ist als an einer Stelle der axialen Erstreckung des Kopfabschnitts (19), an welcher die Felge (14) ihre größte radiale Ausdehnung aufweist.

3. Laufrolle nach Anspruch 1 oder 2, **dadurch gekennzeichnet, dass** die Mantelfläche (22) des Kopfabschnitts (19) bezogen auf den parallel zur Achse (13) und durch die Achse (13) verlaufenden Querschnitt durch die Laufrolle über die gesamte axiale Erstreckung des Kopfabschnitts (19) konvex gekrümmt ist.

4. Laufrolle nach einem der Ansprüche 1 bis 3, **dadurch gekennzeichnet, dass** die Mantelfläche (22) über die gesamte Ausdehnung der ersten und zweiten Randabschnitte (29, 30) konvex gekrümmt ist.

5. Laufrolle nach einem der Ansprüche 1 bis 4, **dadurch gekennzeichnet, dass** die Mantelfläche (22) des Kopfabschnitts (19) stetig an beidseitig an die Mantelfläche (22) anschließende Seitenflächen (26, 27) der Felge (14) anschließt.

6. Laufrolle nach Anspruch 5, **dadurch gekennzeichnet, dass** der Laufbelag (15) zumindest Teile von an die Mantelfläche (22) beidseitig anschließenden Seitenflächen (26, 27) der Felge (14) übergreift.

7. Laufrolle nach einem der Ansprüche 1 bis 6, **dadurch gekennzeichnet, dass** die Mantelfläche (22) der Felge (14) zumindest über die ersten und zweiten Randabschnitte (29, 30) vollständig vom Laufbelag (15) überdeckt ist.

8. Laufrolle nach einem der Ansprüche 1 bis 7, **dadurch gekennzeichnet, dass** die axiale Ausdehnung des Halsabschnitts (20) 20% bis 70%, vorzugsweise 25% bis 40%, der axialen Ausdehnung des Kopfabschnittes (19) beträgt.

9. Laufrolle nach Anspruch 8, **dadurch gekennzeichnet, dass** die axiale Ausdehnung des Halsabschnitts (20) mit zunehmendem Abstand von der Achse (13) zunimmt.

10. Laufrolle nach einem der Ansprüche 1 bis 9, **dadurch gekennzeichnet, dass** der Elastizitätsmodul des Materials der Felge (14) um das 5- bis 10-fache vorzugsweise um das 8- bis 12-fache, größer als der Elastizitätsmodul des Materials des Laufbelages (15) ist.

11. Laufrolle nach einem der Ansprüche 1 bis 10, **dadurch gekennzeichnet, dass** der Elastizitätsmodul des Materials der Felge (14) kleiner als 30000 MPa ist.

12. Ausziehführung zum Ausziehen eines ausziehbaren Möbelteils (36) aus einem Möbelkorpus (37), welche Führungsschienen (38, 39) umfasst, die mittels an den Schienen um Achsen drehbar gelagerten Laufrollen (35) gegeneinander verschiebbar sind, **dadurch gekennzeichnet, dass** mindestens eine der Laufrollen nach einem der Ansprüche 1 bis 11 ausgebildet ist.

## Claims

1. A roller, in particular for pull-out guides for pull-out furniture parts (36), which is rotatable about an axis (13), comprising a tread (15), which forms a running surface (21) of the roller, and a rim (14), to which the tread (15) is applied and which is made of a material whose modulus of elasticity is greater than the modulus of elasticity of the material of the tread (15) and which has a head portion (19) and a throat portion (20) lying radially within the head portion (19), the axial extent of the throat portion amounting to at most 70% of the axial extent of the head portion, wherein the head portion (19) has an outer surface (22) directed away from the axis (13) of the roller, which outer surface (22) forms a boundary surface with the tread (15) and extends as far as a respective end (23, 24), at which a tangent (25) applied to the outer surface of the head portion (19) is at right angles to the axis (13) of the roller, of the axial extent of the head portion (19), and wherein viewed in a cross-section, running parallel to the axis (13) and through the axis (13), through the roller, the outer surface (22) has a convex curvature at least in first and second edge portions (29, 30) of the axial extent of the head portion (19), which adjacent to the respective end (23, 24) of the axial extent of the head portion (19) extend over at least a third of the axial extent of the head portion (19), and the tread (15) projects beyond the head portion (19) by at least 5%, preferably at least 10%, of the axial extent of the head portion (19) of the rim (14) over the respective end (23, 24) of the axial extent of the head portion (19) related to the axial direction of the roller, wherein the rim (14) is formed of POM with inorganic admixtures to increase the rigidity and the tread (15) is formed of elastomer-modified POM, wherein the modulus of elasticity of the material of the tread (15) is greater than 500 MPa and less than 2,500 MPa and the modulus of elasticity of the material of the rim (14) is greater than 4,000 MPa, wherein the modulus of elasticity of the material of the rim (14) is two to 20 times greater than the modulus of elasticity of the material of the tread (15), and wherein related to the cross-section, running parallel to the axis (13) and through the axis (13), through the roller, the tread thickness measured in a radial direction increases steadily toward the respective axial end (23, 24) of the head portion (19), at least over the edge portions (29, 30) of the head portion (19).

2. A roller according to claim 1, **characterized in that** related to the cross-section through the roller, the tread thickness measured in a radial direction at a distance, amounting to 15% of the entire axial extension of the head portion (19), from the respective end (23, 24) of the axial extension of the head portion (19) is greater by 2% to 20%, preferably by 3% to 12%, particularly preferably by 5% to 10%, than at a site of the axial extension of the head portion (19) at which the rim (14) has its greatest radial extent.

3. A roller according to claim 1 or 2, **characterized in that** the outer surface (22) of the head portion (19) related to the cross-section, running parallel to the axis (13) and through the axis (13), through the roller is convexly curved over the entire axial extension of the head portion (19).

4. A roller according to any one of claims 1 to 3, **characterized in that** the outer surface (22) is convexly curved over the entire extent of the first and second edge portions (29, 30).

5. A roller according to any one of claims 1 to 4, **characterized in that** the outer surface (22) of the head portion (19) continuously adjoins lateral surfaces (26, 27), adjoining the outer surface (22) at both sides, of the rim (14).

6. A roller according to claim 5, **characterized in that** the tread (15) overlaps at least parts of lateral surfaces (26, 27), adjoining the outer surface (22) at both sides, of the rim (14).

7. A roller according to any one of claims 1 to 6, **characterized in that** the outer surface (22) of the rim (14) is completely covered by the tread (15), at least over the first and second edge portions (29, 30).

8. A roller according to any one of claims 1 to 7, **characterized in that** the axial extent of the neck portion (20) amounts to 20% to 70%, preferably 25% to 40%, of the axial extent of the head portion (19).

9. A roller according to claim 8, **characterized in that** the axial extent of the neck portion (20) increases as the distance from the axis (13) increases.

10. A roller according to any one of claims 1 to 9, **characterized in that** the modulus of elasticity of the material of the rim (14) is greater than the modulus of elasticity of the material of the tread (15) by 5 to 10 times, preferably by 8 to 12 times.

11. A roller according to any one of claims 1 to 10, **characterized in that** the modulus of elasticity of the material of the rim (14) is smaller than 30000 MPa.

12. A pull-out guide for pulling a pull-out furniture part (36) from a furniture body (37), which comprises guide rails (38, 39) which are displaceable relative to one another by means of rollers (35) mounted on the rails in a manner rotatable about axes, **characterized in that** at least one of the rollers is formed according to any one of claims 1 to 11.

## Revendications

1. Galet de guidage, en particulier pour glissières télescopiques pour éléments de meubles télescopiques (36), lequel est rotatif autour d'un axe (13), comprenant une bande de roulement (15), qui forme une surface de roulement (21) du galet de guidage, et une jante (14), sur laquelle la bande de roulement (15) est appliquée et qui se compose d'un matériau, dont le module d'élasticité est supérieur au module d'élasticité du matériau de la bande de roulement (15), et qui présente une section de tête (19) et une section de col (20), située radialement à l'intérieur de la section de tête (19), dont l'extension axiale est au maximum 70 % de l'extension axiale de la section de tête, dans lequel la section de tête (19) présente une surface d'enveloppe (22), orientée à l'opposé de l'axe (13) du galet de guidage, qui forme une surface de délimitation avec la bande de roulement (15) et qui s'étend jusqu'à une extrémité (23, 24) respective de l'extension axiale de la section de tête (19), au niveau de laquelle une tangente (25) à la surface extérieure de la section de tête (19) est perpendiculaire à l'axe (13) du galet de guidage, et dans lequel dans une vue dans une section transversale du galet de guidage s'étendant parallèlement à l'axe (13) et par l'axe (13), la surface d'enveloppe (22) présente une courbure convexe au moins dans des première et seconde sections de bord (29, 30) de l'extension axiale de la section de tête (19), lesquelles s'étendent ensuite au niveau de l'extrémité (23, 24) respective de l'extension axiale de la section de tête (19) sur au moins un tiers de l'extension axiale de la section de tête (19), et la bande de roulement (15) dépasse d'au moins 5 %, de préférence d'au moins 10 %, de l'extension axiale de la section de tête (19) de la jante (14) au-dessus de l'extrémité (23, 24) respective de l'extension axiale de la section de tête (19) par rapport à la direction axiale du galet de guidage de la section de tête (19), dans lequel la jante (14) est réalisée en POM avec des adjonctions anorganiques pour augmenter la rigidité et la bande de roulement (15) est réalisée en POM modifié par élastomère, dans lequel le module d'élasticité du matériau de la bande de roulement (15) est supérieur à 500 MPa et inférieur à 2 500 MPa et le module d'élasticité du matériau de la jante (14) est supérieur à 4 000 MPa, dans lequel le module d'élasticité du matériau de la jante (14) est 2 à 20 fois supérieur au module d'élasticité du matériau de la bande de roulement (15), et dans lequel par rapport à la section transversale du galet de guidage s'étendant parallèlement à l'axe (13) et par l'axe (13), l'épaisseur de la bande de guidage (15) mesurée dans la direction radiale augmente constamment au moins sur les sections de bord (29, 30) de la section de tête (19) vers l'extrémité axiale (23, 24) respective de la section de tête (19).

2. Galet de guidage selon la revendication 1, **caractérisé en ce que** par rapport à la section transversale du galet de guidage, l'épaisseur de la bande de roulement (15) mesurée dans la direction axiale est à une distance correspondant à 15 % de l'étendue axiale totale de la section de tête (19) de l'extrémité (23, 24) respective de l'étendue axiale de la section de tête (19) supérieure de 2 % à 20 %, de préférence de 3 % à 12 %, de manière particulièrement préférée de 5 % à 10 %, à celle d'un endroit de l'étendue axiale de la section de tête (19), au niveau duquel la jante (14) présente sa plus grande extension radiale.

3. Galet de guidage selon la revendication 1 ou 2, **caractérisé en ce que** la surface d'enveloppe (22) de la section de tête (19) est incurvée de manière convexe par rapport à la section transversale du galet de guidage s'étendant parallèlement à l'axe (13) et par l'axe (13) sur l'étendue axiale totale de la section de tête (19).

4. Galet de guidage selon l'une quelconque des revendications 1 à 3, **caractérisé en ce que** la surface d'enveloppe (22) est incurvée de manière convexe sur l'extension totale des première et seconde sections de bord (29, 30).

5. Galet de guidage selon l'une quelconque des revendications 1 à 4, **caractérisé en ce que** la surface d'enveloppe (22) de la section de tête (19) se raccorde constamment à des surfaces latérales (26, 27) de la jante (14) se raccordant des deux côtés à la surface d'enveloppe (22).

6. Galet de guidage selon la revendication 5, **caractérisé en ce que** la bande de roulement (15) vient en prise sur au moins des parties de surfaces latérales (26, 27) de la jante (14) se raccordant des deux côtés à la surface d'enveloppe (22).

7. Galet de guidage selon l'une quelconque des revendications 1 à 6, **caractérisé en ce que** la surface d'enveloppe (22) de la jante (14) est recouverte entièrement par la bande de roulement (15) au moins sur les première et seconde sections de bord (29, 30).

8. Galet de guidage selon l'une quelconque des revendications 1 à 7, **caractérisé en ce que** l'extension axiale de la section de col (20) est de 20 % à 70 %, de préférence 25 % à 40 %, de l'extension axiale de la section de tête (19).

9. Galet de guidage selon la revendication 8, **caractérisé en ce que** l'extension axiale de la section de col (20) augmente à mesure que la distance de l'axe (13) augmente.

10. Galet de guidage selon l'une quelconque des revendications 1 à 9, **caractérisé en ce que** le module d'élasticité du matériau de la jante (14) est de 5 à 10 fois, de préférence de 8 à 12 fois, supérieur au module d'élasticité du matériau de la bande de roulement (15).

11. Galet de guidage selon l'une quelconque des revendications 1 à 10, **caractérisé en ce que** le module d'élasticité du matériau de la jante (14) est inférieur à 30 000 MPa.

12. Glissière télescopique pour étirer un élément de meuble télescopique (36) hors d'un corps de meuble (37), laquelle comprend des rails de guidage (38, 39), qui sont déplaçables l'un par rapport à l'autre au moyen de galets de guidage (35) logés en rotation autour d'axes au niveau des rails, **caractérisée en ce qu'**au moins un des galets de guidage est réalisé selon l'une quelconque des revendications 1 à 11.
